# EUROPEAN PATENT APPLICATION

(11) **EP 2 466 851 A1**
(43) Date of publication of application: **20.06.2012**
(21) Application number: 10195080.6
(22) Date of filing: 15.12.2010
(51) Int. Cl.: H04L 29/08

(54) **Method and system for establishing a notification service for a device**

(71) Applicant: Research In Motion Limited, Waterloo, ON N2L 3W8 (CA)
(72) Inventor: Kaul, Bhavuk, Redwood City, CA 94065-1183 (US)
(74) Representative: Patel, Binesh

(57) **Abstract**

Methods and apparatuses for establishing a notification service for a computing device. Device requests for current information about a requested topic may be unnecessary if repeated requests are made for current information and the information has not yet changed. In this disclosure, when a requested topic is associated with changing information, a notification service may be configured for the device. The notification service automatically sends updated information to the device when the information changes. The present disclosure describes several ways that requests may be analyzed to determine if a requested topic is associated with changing information. A threshold number of request for a requested topic over a period of time may be used. Alternatively, a requested topic may be configured in a notification service if the requested topic is related to a currently occurring event.

## Description

The present disclosure relates generally to queries on a computing device for information over a communications network, and specifically to news updates.

Computing devices enable users to perform a variety of activities. Many computing devices provide the capability to search for information over a communications network and present the retrieved information. The number of computing device capabilities and the sources of information available to the computing device have vastly expanded due to the development of the interconnected networks, wireless communications networks, syndicated content, online news portals, and advances in social media. Search engines assist computing devices in locating information by receiving queries for information and providing responses to the queries.

Advances in computing devices have been made to manage the growing number of capabilities on computing devices. Some computing devices are equipped with profile information about the user to enhance the user experience. Still other computing devices are configured with logic that reduces the amount of interaction needed for a user to perform certain tasks with the computing device. For example, a convenience key button may provide a single button to launch an application where as a computing device that lacked a convenience key may require more user interaction to launch the application.

Further advances have been made to organize and deliver information to a computing device based on previous interactions. For example, search engines are capable of monitoring a user's search history to provide relevant results (also sometimes called "personalized" search results). Similarly, when a user of a computing device is interested in a particular topic, the user may manually become a subscriber of the topic by indicating to a content provider a desire to receive periodic communications about the topic. In very much the same way that a subscriber may receive a monthly magazine in the mail, a subscriber can receive an electronic communication from the content provider.

However, a problem exists when a user is interested in a particular topic that is only temporarily relevant to the user. In that situation, a periodic communication may be untimely or may include extraneous information not related to the particular topic. For example, the particular topic might include breaking news or rapidly changing information related to a public event lasting only hours or days.

Reference is made to the accompanying drawings which show example embodiments of the present disclosure, in which similar reference numerals are used throughout the figures to denote similar components.

Figure 1a is an illustration of an example system in which example embodiments of the present disclosure may be implemented.

Figure 1b is a flow chart illustrating an example operation of an embodiment of the present disclosure.

Figure 2 is a flow chart illustrating a further example operation of an embodiment of the present disclosure.

Figure 3 is a flow chart illustrating a further example operation of one embodiment of the present disclosure.

Figure 4 is a block diagram illustrating an example server constructed in accordance with one embodiment of the present disclosure.

Figures 5a and 5b are example message sequence charts associated with further example operations of embodiments of the present disclosure.

The present disclosure relates to requests from a computing device for current information about a requested topic. Retrieving information over a communications network may involve queries through a search engine and/or browsing to web pages. Search queries and web browsing may be performed in web browsers or any other client application capable of accessing information over the communications network using a server-client protocol. When a server responds to a request for current information, the response typically includes current information that is available as of the time of the response.

After current information about a topic has been previously retrieved, a computing device may send further requests for the purpose of obtaining updated information about the requested topic. In accordance with one embodiment of this disclosure, upon determining that a requested topic is associated with changing information, a notification service may be configured to automatically send updated information to a device upon a change in the previously sent current information. Utilizing a notification service to deliver updated content may be more efficient than repeated requests for content when the information has not changed since the previous request. This may be preferable, for example, in a system with a mobile device communicating over a wireless communications network. Reducing the amount of content requests (especially when content requests yield information that was already previously delivered) will improve battery life and reduce wasteful consumption of network resources.

In this disclosure, a computing device may obtain content from an information source, such as a web server, search engine, news server, or any other server capable of responding to a request from the computing device. In this disclosure, "requests," "searches," and "queries" may be used interchangeably to represent an interaction from a computing device to a server to retrieve current information. Likewise, "information" and "content" may be used interchangeably. In some implementations, an intermediate server may receive a request from a computing device and transmit a proxy request to a content server to fetch the content. The intermediate server or the content server then responds to the computing device with the fetched content.

In contrast to a request-response interaction between a device and a server, another way that current information is provided to a computing device is a notification (also sometimes referred to as an alert). While queries about a topic provide access to current information that is available at the time of a specific query, notifications provide updated information that subsequently becomes available about the topic after the query. Therefore, notifications are sent in response to a change in the information rather than in response to a specific query. Monitoring for a change in information and sending of notifications (notification messages) is performed by a notification service. Both a request-response interaction and configuring a notification service can occur for the same query.

In one embodiment, the present disclosure provides methods and apparatuses that establish notifications about a topic in response to determining an interest in the topic. In some example embodiments, notification service may be configured upon detecting repetitive queries for current information about a topic. In another embodiment, the notification service is configured to provide relevant updated information about a topic that is associated with a currently-occurring event. Methods and apparatuses used to configure a notification service are disclosed throughout the present disclosure.

In one aspect, the present disclosure describes a method for configuring a notification service in a server. The method comprises receiving from the device at least one request for current information about a requested topic, sending to the device the current information about the requested topic, and if the requested topic is associated with changing information, configuring a notification service to automatically send updated information to the device upon a change in the previously sent current information.

In another aspect, the present disclosure describes a server that is in communication with a device via a network. The server comprises a receiver, a transmitter, a processor and a memory storing non-transitory computer readable instructions. The instructions, when executed by the processor, configure the processor to receive from the device at least one request for current information about a requested topic, send to the device current information about the requested topic, and if the requested topic is associated with changing information, configure a notification service to automatically send updated information to the device upon a change in the previously sent current information.

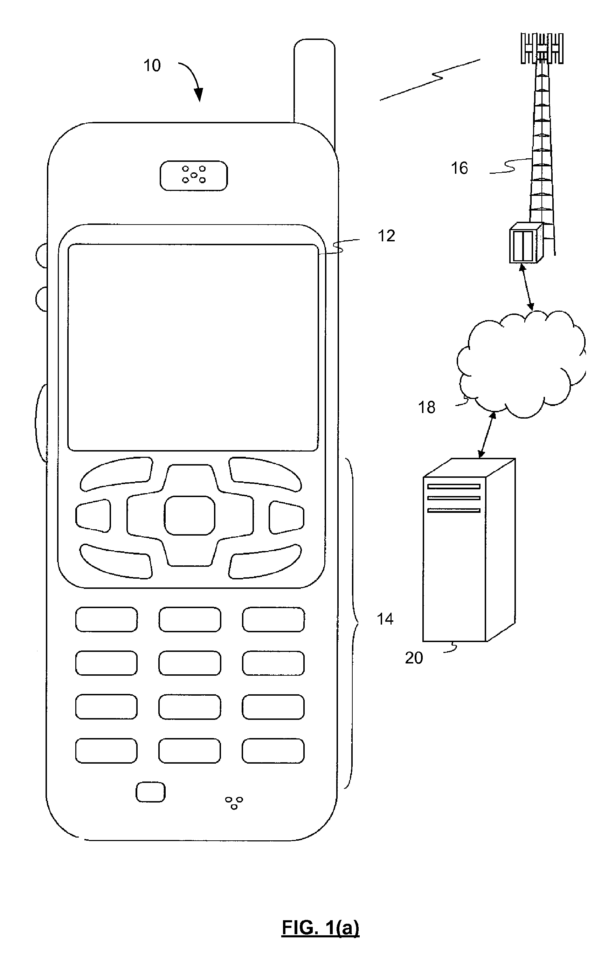

Figure 1(a) is an illustration of an example system in which example embodiments of the present disclosure may be implemented. The example system includes a computing device 10. Computing device 10 includes an output portion 12 and an input portion 14. Although depicted as a screen, it will be understood that output portion 12 may be any component or components of the computing device configured to present information in accordance with the present disclosure. For example, output portion 12 may comprise a computer monitor screen, a projection display, a touch-sensitive display, auditory output device (including speakers or radio-frequency connected output devices), etc. Input portion 12 is depicted as buttons on the computing device, but could alternatively comprise a keyboard, touch-sensitive display, auditory input device (including microphone or radio-frequency connected input devices), etc.

In the present disclosure, the term "computing device" or "device" comprises any computer controlled apparatus having the ability to request content over a communications network from a content source. In some non-limiting examples, a computing device may be (or be a part of) a desktop computer, a laptop computer, a tablet computer, a mobile device, a smartphone, a personal digital assistant, or other such devices.

In Figure 1(a), an example communications network is depicted including a wireless communications network 16 and network infrastructure 18. The example communications network provides access to server 20. Server 20 may comprise a web server, search engine, news server, proxy server or any other content source capable of responding to a request from the computing device 10. In some embodiments, an example system may comprise an intermediate server (not depicted) positioned in a network segment between the computing device 10 and the server 20. The intermediate server may receive a device request from computing device 10 for requested content. Upon receiving the device request, the intermediate server may transmit a proxy request to server 20 to fetch the requested content and then reply to the computing device with the requested content.

It will be understood that content from a server 20 may change over time. In the present disclosure, the term "current information" or "current content" comprises content that is available at the time of a specific request for content. In the present disclosure, the term "updated information" or "updated content" comprises content that becomes available subsequent to a previous request for content. It should be understood that updated information refers to changes to portions of previously obtained "current information" or content that is different after a change to previously obtained current information has occurred. For example, a previously requested web page may comprise current information, while a change in a portion of the previously requested web page comprises updated information.

As non-limiting examples, updated information may include statistics such as a changed score in a currently occurring sporting event, information about a currently occurring conference, breaking news about a recent environmental disaster, or other news stories. Updated information often is associated with a previous request for current information.

An example of current information and updated information may be understood by the following anecdotal example. This example is provided for understanding and is not intended to limit the present disclosure or the invention which is defined by the claims. In the example, a user of computing device 10 is interested in the score of a baseball game that is occurring in another city. The computing device 10 receives an instruction from the user to request the current score of the baseball game. Computing device 10 sends a request to server 20 to retrieve the score. The request to server 20 may be, for example, a search engine query or a request for a web page from a web server. The response from server 20 comprises "current information" which is the score of the baseball game at the time of the request-response interaction.

In the anecdotal example, the user wants to keep informed about the progress of the baseball game which is scheduled to continue for the next couple of hours. In a system unimproved by the present disclosure, the computing device may receive continuous or periodical instructions to request the current score. For example, the user may click a "refresh" command on a web browser, or submit a subsequent query to a search engine. This repeated request for current information may cause waste in network resources, unnecessary interaction with the device (when the score is unchanged), or battery drain of the computing device 10. In an embodiment of the present disclosure, either the computing device 10 or the server 20 (or intermediate server) recognizes the repeated request for current information and determines that a notification service can be configured to provide notifications about updated information. Notifications about updated information reduce the need to repeat requests from the computing device, while still providing updated information about the score to the computing device.

The notification service may be configured in response to detecting a quantity of requests above a predefined threshold (such as, in a non-limiting example, two requests in a five minute period). For example, when a computing device determines that the quantity of requests is above the predefined threshold, the computing device may present a prompt via the user interface to allow creation of the notification service. The computing device 10 may communicate settings of the notification service to server 20 (or intermediate server) to establish the notification service. In another embodiment, the server 20 (or intermediate server) detects a quantity of requests from the computing device 10 above a predefined threshold and sends a message to the computing device to suggest establishing a notification service.

In some embodiments, either the device or the server may determine that the requested topic is associated with a currently-occurring event, such as a sporting event, conference, environmental disaster, or breaking news, as non-limiting examples. When establishing the notifications for updated information, the notifications are tailored to provide the updated information associated with the ongoing event and the notification service can be terminated after the ongoing event has ended.

In some embodiments, the updated information sent to the device may include the information that has changed, but exclude the current information that has not changed. In other embodiments, some subset of current information that is considered relevant to the requested topic may be included with the updated information. Returning to the anecdotal example, the changed or updated information may comprise the number of outs and inning of play in the baseball game and may include unchanged information such as the names of the teams playing the game.

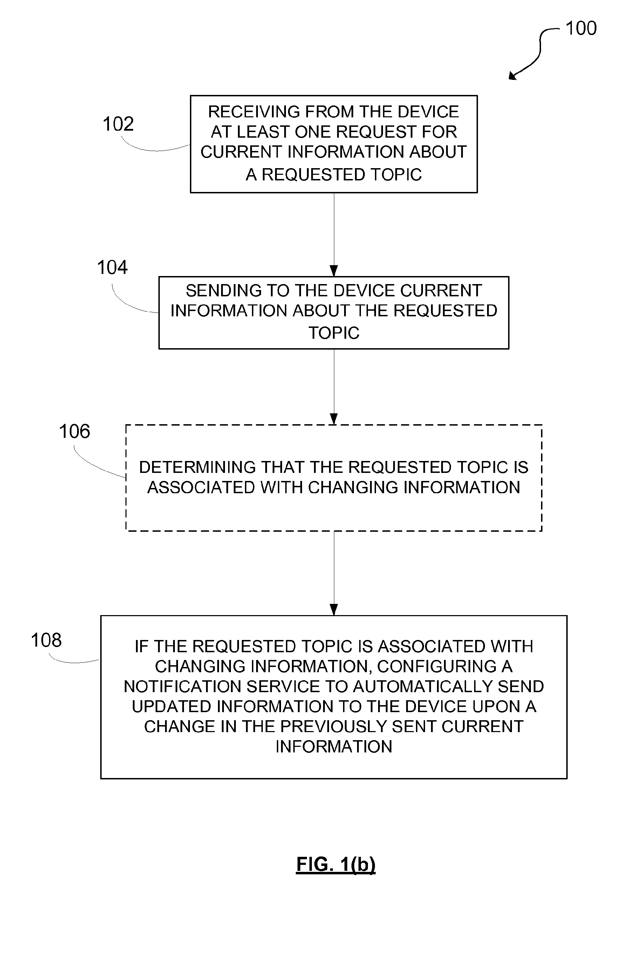

Reference is now made to Figure 1(b) which illustrates an example method of operation of the present disclosure. The method 100 illustrates processing of requests from a device to establish a notification for the device within a communications network. A request may include a search query, a request to visit, open, load or refresh a web page or other network content, an http request, an RSS request, proprietary protocol requests or other request to access content from a remote location over a network. Secure requests and requests for login-protected content may be implemented where the server or the notification service is provided the appropriate credentials.

Generally, the method 100 is described from the perspective of a server 20 unless otherwise indicated. However, all or part of the method 100 may also be implemented by disparate servers in the network or by the computing device 10. It should be understood that method 100 could be implemented in a device by substituting "receiving from the device" with "sending to the server" and substituting "sending to the device" with "receiving from the server."

At 102 at least one request ("request") from the device for current information is received. A request can be received via any communication channel between the device and the server or other structure implementing the method 100. The device may also include a component or application which receives the request from the device. Whichever machine receives the request can identify information about each request and, in some embodiments, record and maintain a history of requests from the device. The information identified or recorded about requests can include search terms, the URL accessed, a timestamp, the request source, content that would be provided in response to the request, counting the number and frequency of requests and other such statistical information.

Receiving a request for current information also permits identification of a topic from the request. This may be a simple analysis from a single request, such as considering keywords in a search string or comparing the request with requests from other devices or comparing the request with requests already associated with a topic. In one embodiment, a requested topic is identified by accessing a repository of currently-occurring or future scheduled events, comparing the time of the request to the times of events, or otherwise deducing a requested topic from the request, or from a group of requests.

At 104, the method 100 sends to the device the current information about the requested topic. This is an optional action which provides current information according to an initial request-response interaction, for example. If the device has not recently been provided current information, current information can be provided in response to the request. Where the requested topic has also been determined to be associated with changing content, it may not be necessary to provide current information to the device, especially if there have been no changes to current information previously provided and a notification service will be configured in accordance with this disclosure. In another example, block 104 may be performed as part of block 106, in which a notification service is configured and the current information is sent to the device as part of the notification service configuration operation.

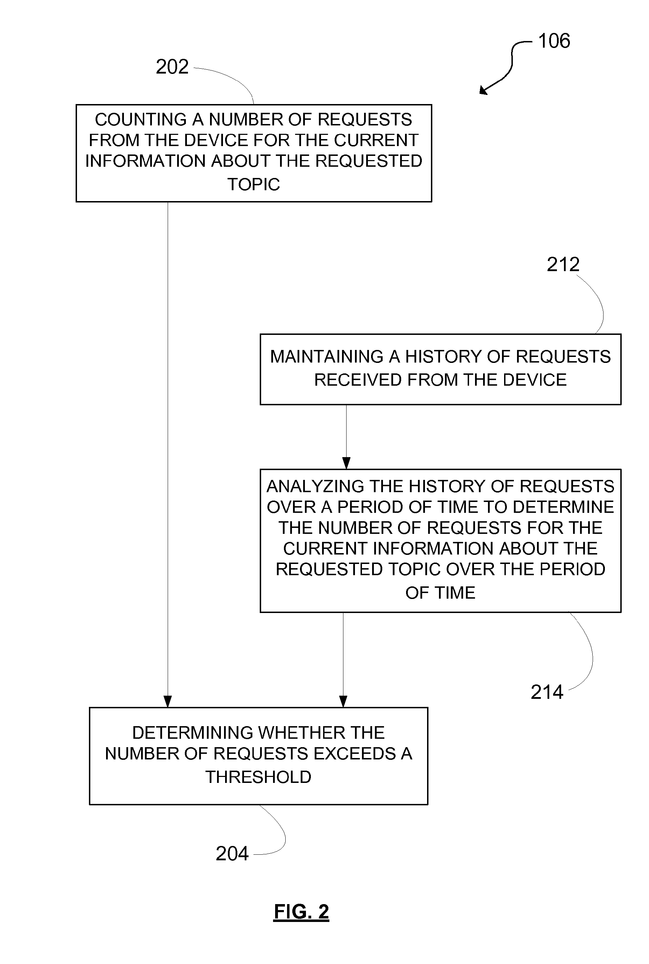

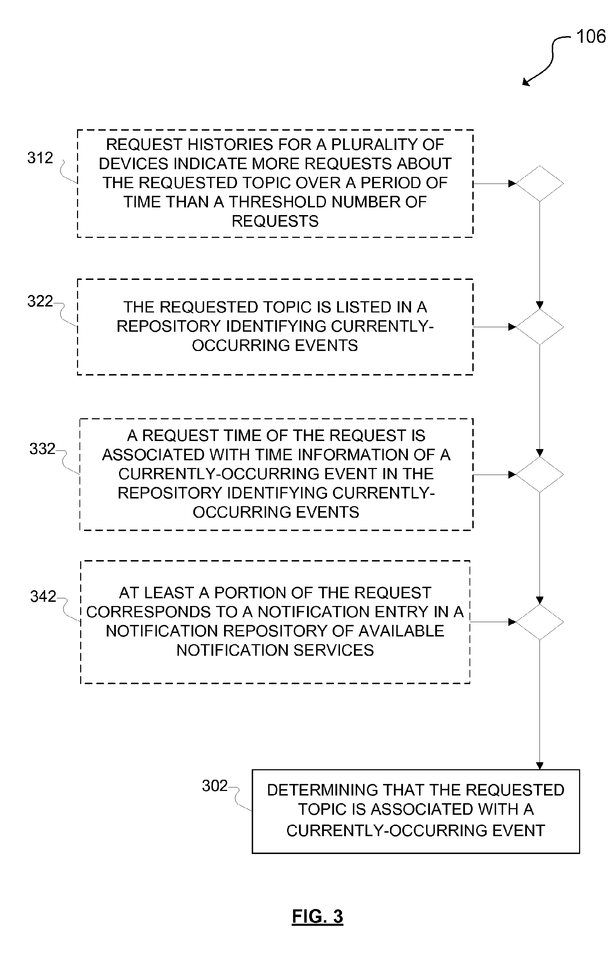

At 106, the method optionally comprises the operation of determining that the requested topic is associated with changing information. Operation 106 may be implemented in numerous ways based on analysis of the information known or recorded about the requested topic. Some example methods are described in greater detail below in the description of Figures 2 and 3. Other example methods for determining that the requested topic is associated with changing information may include parsing hyperlinks, web pages, web page source code or other information in the current information about the requested topic. The range of methods that may be used will be understood by the skilled person from detailed review of the present disclosure.

At 108, if the requested topic is associated with changing information, the method comprises configuring a notification service to automatically send updated information to the device based upon or in response to a change in the previously sent current information. Configuring the notification service may comprise an operation to inform the device that updated information will automatically be provided upon a change in the previously sent current information. Thus the device is relieved of the need to send repeated requests for current information to a server.

Configuring the notification service may comprise further operations. A notification service typically involves a server (for example a content server, intermediate server or notification server) sending updated information to the device when the current information changes. Accordingly, the notification service is implemented at the content server, intermediate server, or notification server. However, the device may communicate settings for the notification service to the server. Therefore, notification service establishment and configuration can include an interaction between the device and the server.

In some embodiments, the device is prompted regarding the availability or suggestion to establish the notification service. In one embodiment, a server may send a notification establishment message to the device, wherein the notification establishment message indicates that the notification service is available to automatically send updated information about the requested topic. A device may respond with a notification acknowledgement message requesting the notification service be configured for the device.

It should be apparent that notification establishment can come as a result of the device detecting a candidate notification or as a result of the server detecting the candidate notification. In either case, the notification establishment may include a prompt that is provided in an output portion of the device. The prompt may include text, visual, audio or multimedia information, a hyperlink, button or other interactive indication that there is an opportunity to establish a notification service. The prompt may indicate the benefit of receiving updated information in a notification to inform a user of the device that it would be unnecessary to send repeated requests or queries for current information. In some example embodiments, prompting may be associated with displaying an example update on the device composed from updated information or current information such that the device can preview the updates that it may receive if a notification service is established.

The device response to a notification establishment message may comprise any affirmative or negative indication from the device. Depending on the type of notification establishment message, the response may be a simple acknowledgement, may include an indication of a specific topic or subset of information requested, or may include a list of terms to be associated with the notification service. In some embodiments, the device response may provide identification indicators that identify the device or the user so that the notification service can be maintained in association with the identification indicators.

In one non-limiting example embodiment, the notification establishment message requests a response from the device as to which statistics or topics the device seeks in the updates. For example, a notification establishment message may include a list of specific statistics associated with the requested topic and request a response as to which of statistics to include in notifications. The response may require selecting, such as by a checkbox, some of those specific statistics for configuring the notification service.

Upon a change in the current information about the requested topic, the notification service sends updated information about the requested topic to the device. If the notification service is located on a server where the current information and updated information are stored, the notification service may be configured to automatically send updated information based on a change to the stored information. Alternatively, a notification service may be on a server that is separate from the information source, in which case the notification service may detect a change by receiving an update from the information source, by regularly polling the information source to discover changes, or by subscribing to a second notification service associated with the information source. Regardless of the location of the notification service, it detects a change in the current information without a need for the device to send repeated queries or requests.

The method 100, or parts of the method, may also be implemented on a mobile device. In one example embodiment, if several queries have been transmitted by the mobile device in a period of time, the mobile device may consider the queries as potential candidates for notification service. The mobile device may perform further verification of the potential candidate (for example, by requesting verification from a centralized notification management server) to determine if the queries are related to the same topic or to an ongoing event. In some example embodiments, the mobile device can analyze the query or queries sent to a content provider to determine qualifying notification services. Whenever a potential candidate for notification service is determined, and optionally verified, the mobile device may promote configuration of the notification service. For example, configuration of the notification service may be performed in concert with sending the request to the content provider.

Operations to determine that the requested topic is associated with changing information are described by reference to Figures 2 and 3 and illustration of example methods. It is to be understood that the present disclosure is not limited to the example methods described in Figures 2 and 3 but encompasses all possible methods of determining that the request is associated with updated information.

Referring generally to Figure 2, a method 106 for determining that the requested topic is associated with changing information may involve comparing a number of requests regarding a requested topic with a threshold. In one embodiment, the method comprises counting requests for the same current information. The number of requests for the current content can be counted to determine whether those requests are related to a topic with changing information. At 202, the method comprises counting a number of requests from the device for the current information about the requested topic. For example, the count may include a sequence of identical requests repeated over a defined period of time. At 204, the method comprises determining whether the number of requests exceeds a threshold. If the number of requests exceeds the threshold, the requested topic may be associated with changing information. The threshold may be defined as a quantity of requests for the same current information or requested topic. The threshold may also be defined as a quantity of requests regarding the requested topic over a period of time. The time period may be, for non-limiting example, 5 minutes. Where a request can be associated with an event or can be otherwise categorized, the appropriate threshold time duration may change. For example, repeated requests for updated information about the weather may occur over a span of an hour, while the threshold time duration may be very short (e.g. 2 minutes) for a sporting event. Where the requested topic is related to a currently occurring event, the threshold time may be related to the duration of the event. In another example, the time duration may be related to the amount of time remaining in an online auction.

In some embodiments, counting a number of requests from the device for the current information may include maintaining and analyzing a history of requests received from the device. This embodiment is illustrated in the second path shown in Figure 2. At 212, a history of requests received from the device is maintained. The history of requests may be maintained at the content server, an intermediate server, the device, or any machine or combination of machines in the network path between the device and the content server. As described above, there are many pieces of information related to each request that can be recorded to determine if the requests related to the same requested topic. At 214, the history of requests is analyzed to determine the number of requests for current information about the requested topic over a period of time.

In 214, "analyzing" may include determining whether requests are related to the same requested topic. Those requests that are determined to be related to the same requested topic are included in the count of the number of requests related to that requested topic. For example, "analyzing" may include matching or correlating one or more keywords in the requests, searching for and locating an association between a keyword in one request and a keyword in another request in a database or repository configured to store such associations, or other correlation operations. Requests may be counted if they are related to the same topic regardless of whether the requests are identical. For non-limiting example, requests made to different content pages for the score and inning of the same baseball game may be counted as related to the same requested topic. Alternatively, search queries with the same keywords in different order, with different but related keywords, without similar keywords but associated with the same topic, or search queries to different search engines could nonetheless form a requests associated with the same requested topic. One manner of determining that requests are associated with the same requested topic is determining that the current information provided in response to the requests is sufficiently similar. At 204, the number of requests counted at 214 is compared with a threshold and if the number of requests exceeds the threshold, the method comprises determining that the requested topic is associated with changing information.

In Figure 3, a method for selectively configuring a notification service may comprise method operations 106 for determining that the requested topic is associated with a currently-occurring event. Figure 3 provides several conditions which may be used to determine that the requested topic is associated with a currently-occurring event. The conditions may be used together or separate, and Figure 3 is not intended to suggest that any of the conditions are required in a method for selectively configuring the notification service.

At 312, request histories for a plurality of devices may be analyzed. If there are more requests about the requested topic over a period of time than a threshold number of requests, the requested topic is determined to be associated with a currently-occurring event at 302. When the request is associated with a currently-occurring event, the request may trigger a method operation to configure a notification service about the requested topic.

At 322, the requested topic may be listed in an event repository which records currently-occurring or scheduled events. If the requested topic is listed in the repository, the requested topic is determined to be associated with a currently-occurring event at 302.

An event repository may comprise a collection of information about events that have occurred, are occurring or will occur in the future. The event repository may explicitly list events and event identifying information for index, searching and correlation or it may comprise information available over a network from disparate sources which can be accessed and analyzed by the server to determine event identifying information. An event repository provides a mechanism to identify current and future events.

At 332, the time of the request may be compared to time information of currently-occurring events to determine that the request is associated with a currently-occurring event. Where an event has a specific timeframe, such as a sports match, a request regarding a sports match when the match is occurring provides a strong indication that the request is related to updated information. If the time of the request is associated with the time information of a currently-occurring event, the requested topic is determined to be associated with a currently-occurring event at 302.

At 342, the requested topic or other information of the request may be compared and matched to existing notification services in a notification repository. Notification services may exist for various different events which can be used to configure an appropriate notification service for the device. A notification repository may store a list of existing notification services (each having a notification entry in the notification repository). Keywords associated with each notification entry may be searched to determine whether the request is associated with a currently-occurring event. Efficiencies can also be created where a plurality of devices have configured the same notification service. This may be especially relevant for sports matches where many devices may request updated information about a particularly exciting or anticipated match. If at least a portion of the request corresponds to a notification entry in a notification repository of existing notification services, the requested topic is determined to be associated with a currently-occurring event at 302.

It will also be appreciated that a request related to a requested topic may be determined 302 to be associated with a currently occurring event through combinations of two or more of the operations 312, 322, 332, 342. In some cases, the determination may be made using a weighted combination of such operations.

If a requested topic is associated with a currently-occurring event, it may be possible to determine a termination condition for the notification service. A termination condition permits further automation of the management of the notification service. For example, sporting events will have an expected conclusion that may or may not be time fixed such as cricket matches and baseball's nine or more innings. Some events such as natural disasters, breaking new stories, stock and currency prices and other events may be automatically terminated based on a minimum threshold frequency of updated information becoming available or expiry of a default time duration since the last updated information became available. If there is a termination condition identified, the notification establishment prompt may also suggest the termination condition, so that the notification service may be configured to automatically terminate upon satisfying the termination condition.

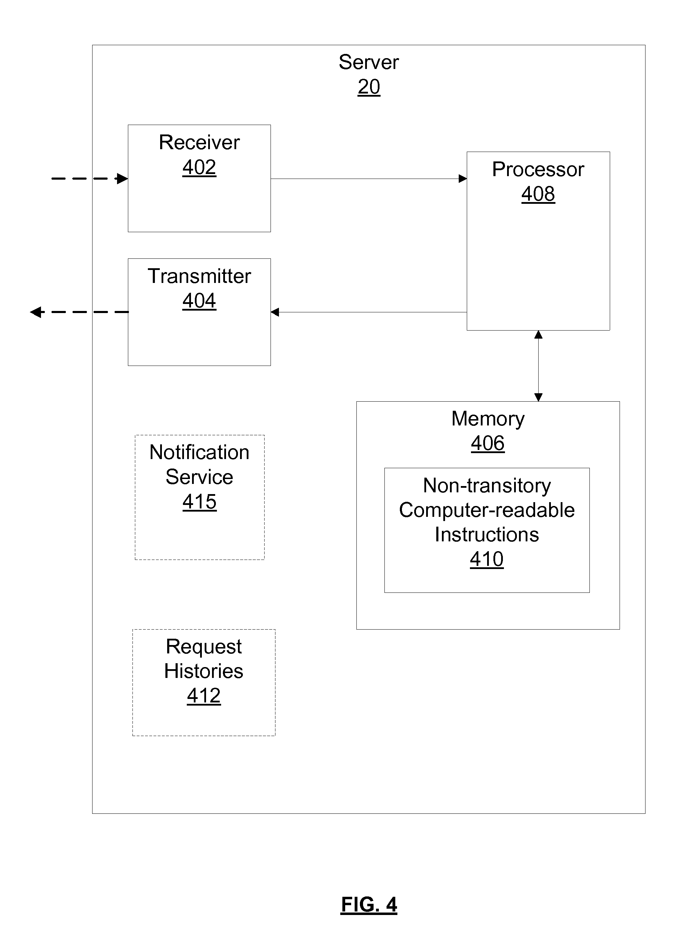

Figure 4 provides a description of an example server 20 capable of implementing various embodiments of the present disclosure. The server can configure a notification service for a device that the server 20 can communicate with over a network. The server 20 comprises a receiver 402, a transmitter 404, a memory 406 and a processor 408. The memory 406 includes non-transitory computer readable instructions 410. The instructions, when executed by the processor, configure the processor to receive from the device at least one request for current information about a requested topic, send to the device current information about the requested topic, and if the requested topic is associated with changing information, configure a notification service to automatically send updated information to the device upon a change in the previously sent current information. The server 20 may also include request history 412 for a history of requests from the device or from a plurality of devices. In some embodiments the request history 412 is stored in a database or other memory structure in memory 406. Further instructions 410 may be included to implement other features of the present disclosure herein described. In some example embodiments, the server 20 may include the notification service 415.

As is known to one skilled in computer science, the processes and methods described above may be implemented in code and formed into computer readable instructions to be stored in the memory of the server or in an appropriate computer readable medium.

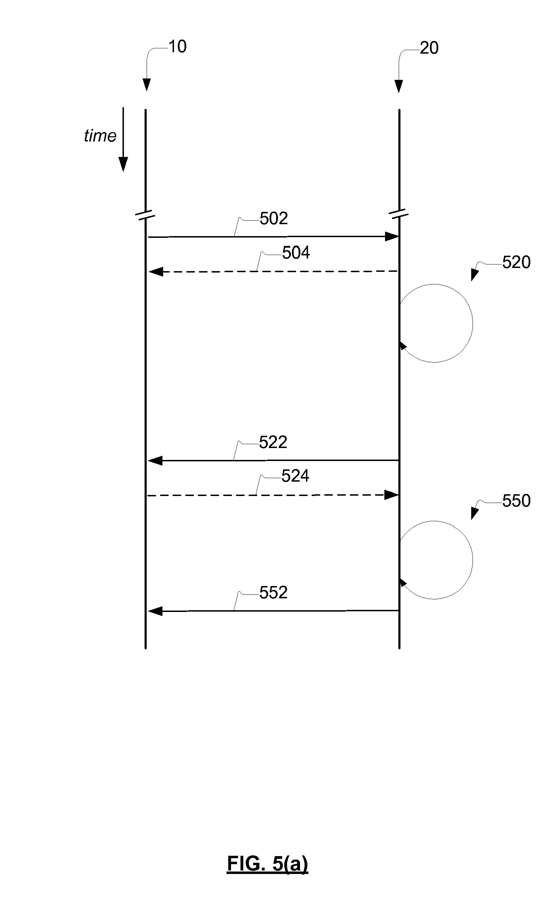

Referring now to Figures 5(a) a message sequence chart is illustrated for communications between a device 10 and a server 20 in an example embodiment of the present disclosure. Request message 502 is sent from the device 10 to the server 20, requesting current information about a requested topic. The response message 504 from the server 20 (or from other servers not shown) contains current information in response to the request message 502. At 520, the server determines that the requested topic is associated with changing information. Alternatively at 520, the server may determine that the requested topic is related to a currently-occurring event. The server 20, sends a notification establishment message 522 to the device 10. The notification establishment message may indicate that a notification service has been configured to automatically send updated information about the requested topic. Alternatively, the notification establishment message may indicate that a notification service is *available* to automatically send updated information about the requested topic.

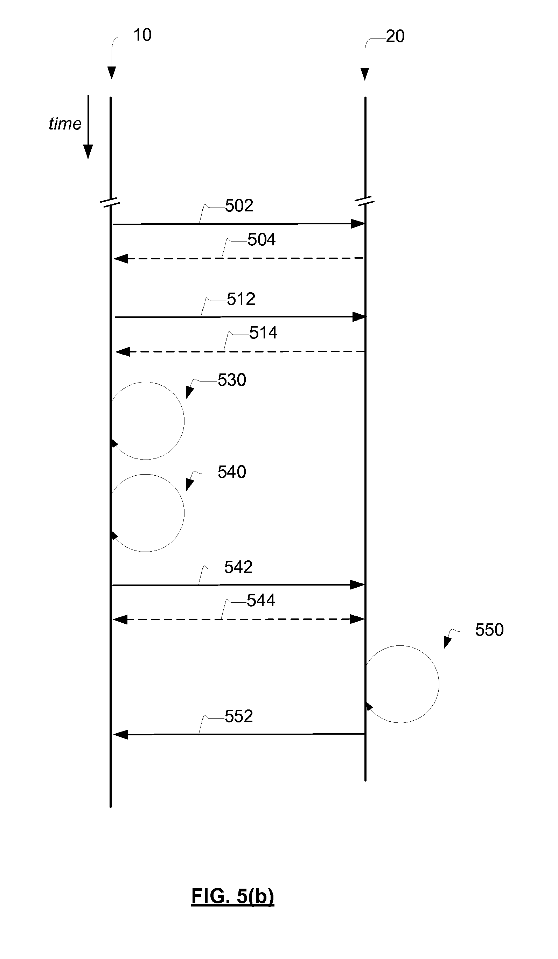

Not shown in Figure 5, the process may include an optional procedure for the device to provide a prompt to the user of the device to configure the notification service. The prompt may indicate that the notification service has been established or that it is available. The prompt may collect information needed to finalized configuration of the notification service. For example, the prompt may collect an optional termination condition (time, number of updates, etc) for automatically terminating the notification service. The prompt may also collect identification information, about the user or the device, needed by the notification service to identify the recipient of the notifications.

A notification acknowledgement message 524 may be sent by the device 10. If the notification acknowledgement message 524 affirmed configuring the notification service, the notification service configuration is completed. At 550, the server (or an independent notification service) detects that the current information has changed. An update message 552 (also called a notification) is sent to the device 10 to provide updated content about the requested topic.

Figure 5(b) describes an example embodiment in which the device establishes a notification service. Figure 5(b) illustrates a message sequence chart of communications between a device 10 and a server 20. Request message 502 is sent from the device 10 to the server 20, requesting current information about a requested topic. The response message 504 contains current information from the server. In this example, the device sends further request messages for the same requested topic, including request message 512. Response message 514 may include the same current information already previously provided to the device in response message 504.

At 530, the device determines that the request messages 502, 512 exceed a threshold number of requests for the requested topic in a period of time. Alternatively, the device may determine that the request messages 502, 512 are related to a requested topic associated with changing information. In a further alternative, the device may determine that the current information in response message 504 is the same as the current information in response message 514, and determine that the requested topic may be related to potentially changing information. In some embodiments, the device may perform a verification procedure (not shown) in which the device provides the requested topic to a notification service or other intermediate server to determine whether the requested topic may be eligible for a notification service.

At 540, the device 20 prompts the user to confirm establishing a notification service for the requested topic. As described in other portions of this disclosure, the prompt may solicit additional information needed to configure a notification service. The device 10 sends a configuration message 542 to the notification server (which may or may not be part of the server 20) to establish and configure the notification service. The device may receive a notification acknowledgement message 544 indicating that the notification service has been configured.

At 550, the notification server determines that there is updated information related to the requested topic. In other words, there has been a change to the current information previously provided to the device. An update message 552 (notification) is sent to the device 10 to provide the updated information.

It will be apparent to those having ordinary skill in the art that certain adaptations and modifications of the described embodiments can be made, consistent with and without departing from the scope of the present disclosure. Unless otherwise indicated, the embodiments described in the disclosure shall be understood to be non-exclusive of each other such that any embodiment can include different features of other embodiments. Therefore, the above discussed embodiments are considered to be illustrative and not restrictive. Other embodiments consistent with the present disclosure will become apparent from consideration of the specification and the practice of the present disclosure taught and suggested herein.

The methods for determining that a requested topic may be associated with changing information may be applied in combination to improve the accuracy of the determination. Accordingly, these methods should not be considered solely in isolation, but should be considered as methods which may operate in concert to determine a request or group of requests relates to a requested topic associated with changing information.

In some embodiments of the present disclosure, the method of determining that the requested topic is associated with changing information may be an iterative or adaptive process which involves modifying the analysis of requests based on the device's response to prompts to configure a notification service.

In some embodiments on the present disclosure, the server receiving the request from the device for current information is also the server that provides the current information to the device. For non-limiting example, the server may be part of a cellular network which a mobile device is connected to as a subscriber and the mobile device's wireless requests are received by a base station of the cellular network and processed by a back end server to provide the current information and to implement the present disclosure.

In some example embodiments, as an alternative, or in addition to providing updated information, the notification service may provide information on a periodic basis to the device. The frequency may be customized based on an event associated with the notification, based on the device's response to the prompt to establish a notification or as otherwise set by the device or the server.

The form or format of the update message (or notification) is not intended to limit the present disclosure. The update message may comprise a Simple Messaging Service (SMS) message, an Enhanced Messaging Service (EMS) message, a Multimedia Messaging Service (MMS) message, an email, a voice message, a picture message, a video message, a PIN message, a series of data packets, a portion of another transmission within which the updated information is inserted or any other kind of message.

The content of "updated information" may be delivered in a variety of forms such as, but not limited to: text, audio, video, equivalents thereof, or other information that is accessible by a computing device. The present disclosure is not intended to be limited by the type or format of the updated information.

In some example embodiments of the present disclosure, the method is implemented as a set of non-transitory computer readable instructions stored on a tangible computer readable medium. Such tangible computer readable medium may be an independent medium from a computer such as a memory card, compact disc or other such storage medium. In some embodiments, this tangible computer readable medium also may also form part of the device, the server, or another computer implemented apparatus.

Accordingly, descriptions of the embodiments disclosed herein are to be considered exemplary only, with the true scope of the present disclosure being identified in the following claims.

## Claims

1. A method for configuring a notification service in a server (20) that communicates with a device (10) via a network, the method comprising:
receiving from the device at least one request for current information
about a requested topic (102);
sending to the device current information about the requested topic
(104); and
if the requested topic is associated with changing information,
configuring a notification service to automatically send updated information to the device upon a change in the previously sent current information (108).

2. The method of claim 1, further comprising:
counting a number of requests from the device for current information
about the requested topic (202); and
determining that the requested topic is associated with changing
information if the number of requests exceeds a threshold (204).

3. The method of claim 2, wherein counting the number of requests comprises:
maintaining a history of requests received from the device (212); and
analyzing the history of requests over a period of time to determine the
number of requests for current information about the requested topic over the period of time (214).

4. The method of any preceding claim, further comprising:
determining that the requested topic is associated with changing information if the requested topic is associated with a currently-occurring event (302).

5. The method of claim 4, further comprising:
determining that the requested topic is associated with the currently-occurring event if request histories for a plurality of devices indicate more requests about the requested topic over a period of time than a threshold number of requests (312);
determining that the requested topic is associated with the currently-occurring event if the requested topic is listed in a repository identifying currently-occurring events (322);
determining that the requested topic is associated with the currently-occurring event if a request time of the request is associated with time information of a currently-occurring event in the repository identifying currently-occurring events (332); and
determining that the requested topic is associated with the currently-occurring event if at least a portion of the request corresponds to a notification entry in a notification repository of available notification services (342).

6. The method of claim 4 or claim 5 further comprising:
terminating the notification service for the device after the currently-occurring event ends.

7. The method of any preceding claim, wherein configuring the notification service comprises:
sending to the device a notification establishment message, wherein the
notification establishment message indicates that the notification service has been configured to automatically send updated information about the requested topic.

8. The method of any preceding claim, wherein configuring the notification service comprises:
sending to the device a notification establishment message, wherein the
notification establishment message indicates that the notification service is available to automatically send updated information about the requested topic; and
receiving from the device a notification acknowledgement message
requesting the notification service be configured for the device.

9. The method of any preceding claim, wherein the notification service is a component of the server.

10. A server (20) that is in communication with a device (10) via a network, the server comprising:
a receiver (402);
a transmitter (404);
a processor (408);
a memory (406) storing non-transitory computer readable instructions (410) which, when executed by the processor, configure the processor to:
receive from the device at least one request for current information
about a requested topic (102);
send to the device current information about the requested topic
(104); and
if the requested topic is associated with changing information,
configure a notification service to automatically send updated information to the device upon a change in the previously sent current information (108).

11. The server of claim 10 wherein the non-transitory computer readable instructions include further instructions which, when executed by the processor, configure the processor to:
count a number of requests from the device for current information
about the requested topic (202); and
determine that the requested topic is associated with changing
information if the number of requests exceeds a threshold (204).

12. The server of claim 11 wherein the non-transitory computer readable instructions include further instructions which, when executed by the processor, configure the processor to:
maintain a history of requests received from the device (212); and
analyze the history of requests over a period of time to determine the
number of requests for current information about the requested topic over the period of time (214).

13. A computer readable medium for storing non-transitory computer readable instructions which, when executed by a processor in a communications network, configure the processor to implement any of the methods of claims 1-9.

14. A method in a device for configuring a notification service, the method comprising:
sending to a server at least one request for current information about a
requested topic;
receiving from the server a notification establishment message, wherein
the notification establishment message indicates that a notification service is available to automatically send updated information to the device about the requested topic and further indicates whether the notification service has already been configured; and
if the notification has not already been configured, sending to the server
a notification acknowledgement message requesting the notification service be configured for the device.

15. The method of claim 14, further comprising:
receiving from the server current information about the requested topic;
and
upon a change in the current information, receiving updated information
about the requested topic.
